# EUROPÄISCHE PATENTSCHRIFT

(11) **EP 3 792 216 B1**
(45) Veröffentlichungstag und Bekanntmachung des Hinweises auf die Patenterteilung: **15.06.2022**
(21) Anmeldenummer: 19020527.8
(22) Anmeldetag: 12.09.2019
(51) Int. Cl.: C01B 3/36, C10K 1/10, C10J 3/20, F28D 7/04, F28D 7/16, F28D 9/00

(54) **WÄRMEINTEGRATION BEI DER SYNTHESEGASERZEUGUNG DURCH PARTIALOXIDATION**
HEAT INTEGRATION IN SYNTHESIS GAS GENERATION BY MEANS OF PARTIAL OXIDATION
INTÉGRATION THERMIQUE LORS DE LA GÉNÉRATION DES GAZ DE SYNTHÈSE PAR OXYDATION PARTIELLE

(43) Veröffentlichungstag der Anmeldung: 17.03.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Müller-Hagedorn, Matthias, 76199 Karlsruhe (DE)
(74) Vertreter: Dropsch, Holger

(56) Entgegenhaltungen:
- WO-A1-03/080503
- CN-B- 102 329 189
- US-A- 5 670 061

## Beschreibung

### Gebiet der Erfindung

Die Erfindung betrifft ein Verfahren zur Herstellung eines Wasserstoff und Kohlenoxide umfassenden Synthesegases durch partielle Oxidation fester, flüssiger oder gasförmiger, kohlenstoffhaltiger Einsatzströme, beispielsweise flüssiger Brennstoffe wie Öl, Schweröl, Pyrolyseöle oder Pyrolysesuspensionen, sog. Pyrolyseslurries, in Gegenwart eines sauerstoffhaltigen Oxidationsmittels und eines Moderators, enthaltend Wasserdampf und/oder Kohlendioxid, wobei das erhaltene Rohsynthesegas einen signifikanten Anteil an Feststoffen in Form feiner Partikel, beispielsweise als Ruß, aufweist und mittels einer der partiellen Oxidation nachgeschalteten, schlagartigen Abkühlung (Quench) abgekühlt wird.

Die Erfindung betrifft ferner eine Anlage zur Durchführung des erfindungsgemäßen Verfahrens.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese.

Ein gängiges Verfahren zur Herstellung von Synthesegasen ist die autotherme Flugstromvergasung von gasförmigen, flüssigen oder festen Brennstoffen durch partielle nichtkatalytische Oxidation mit einem sauerstoffhaltigen Oxidationsmittel, wie sie beispielsweise in der DE 10 2006 059 149 B4 beschrieben ist. Am Kopf eines Reaktors sind zentral ein Zünd- und Pilotbrenner sowie rotationssymmetrisch zur Reaktorachse mehrere Vergasungsbrenner angeordnet. Über die Vergasungsbrenner wird einem Vergasungsraum des Reaktors der Brennstoff mit Sauerstoff und Dampf als Vergasungsmittel zugeführt, in dem der Brennstoff zu Synthesegas umgesetzt wird. Das heiße Vergasungsgas verlässt gemeinsam mit der flüssigen Schlacke den Vergasungsraum und gelangt in einen Quenchraum, in den zur schlagartigen Abkühlung von Rohsynthesegas und Schlacke Wasser eingedüst wird. Das als Quenchmittel verwendete Wasser sammelt sich im unteren Teil des Quenchraums als Wasserbad, so dass sich im unteren Bereich des Quenchraums ein Quenchwasserfüllstand ausbildet. Die Schlacke lagert sich im Wasserbad ab und wird über einen Schlackeaustrag abgeführt. Das gequenchte Rohsynthesegas wird wasserdampfgesättigt aus dem Quenchraum abgezogen und in nachfolgenden Reinigungsstufen gereinigt. Da der Brennstoff direkt mit dem Oxidationsmittel umgesetzt wird, werden Oxidationsmittel und Brennstoff koaxial oder koannular zugeführt.

Je nach den verwendeten Einsatzstoffen und den Vergasungsbedingungen wird bei der Vergasung ferner Ruß in Form von Rußpartikeln erzeugt. Diese lagern sich ebenfalls in dem Wasserbad ab.

Spezielle Technologien zur Vergasung von flüssigen und gasförmigen Brennstoffen wurden bereits Ende der 1940er Jahre von Texaco und Anfang der 1950er Jahre von Shell entwickelt. In späteren Jahren hat Lurgi mit der Vermarktung einer dritten Technologie begonnen, die als Mehrzweckvergasung (MPG) bekannt ist und die ursprünglich aus dem Kohlevergasungsprozess entwickelt wurde, um die dort produzierten Teere zu entsorgen.

Bestimmte Schlüsselmerkmale aller drei Prozesse sind ähnlich. Alle arbeiten mit Flugstromreaktoren und die Betriebstemperaturen sind ähnlich, nämlich im Bereich von 1250 bis 1450 °C. Beim Betrieb auf flüssiger Beschickung erzeugen alle drei Prozesse eine geringe Menge an Restkohlenstoff, was notwendig ist, um die Asche aus dem Reaktor abzuscheiden. Die wesentlichen Unterschiede zwischen den Prozessen liegen in den Details des Brennerdesigns, bei der Methode der Syngas-Kühlung und bei der Rußhandhabung.

Im Texaco-Prozess wird das Öl-Einsatzmaterial mit Dampf als Moderator vermischt und in einem Heizer vorgewärmt. Der Texaco-Brenner ist wassergekühlt, in dem Dampf und Öl über einen Ringschlitz, der das zentrale Sauerstoffrohr umgibt, zusammengeführt werden.

Der Prozessdampf wird verwendet, um das Öl-Einsatzmaterial zu zerstäuben, und eine gute Vermischung wird dadurch gewährleistet, dass den beiden Strömen eine gegenläufige Wirbelbewegung verliehen wird. Der Reaktor selbst ist ein leeres, feuerfestes Gefäß. Die Rußproduktion beträgt ca. 1 bis 2 Gew.-% bezogen auf den Brennstoffeinsatz.

In einer Variante des Texaco-Prozesses wird das erzeugte Roh-Synthesegas durch direktes Abschrecken bzw. schlagartiges Abkühlen im direkten Wärmetausch ("Quenchen") mit Wasser als Quenchmittel gekühlt. In diesem Quench-Modus verlässt das heiße Rohsynthesegas den Boden des Reaktors über ein Tauchrohr in den Quenchabschnitt. Das gequenchte Synthesegas ist mit Wasser gesättigt und verlässt den Quenchabschnitt mit einer Temperatur von etwa 250 °C.

Die hohe Wasserbeladung macht das gequenchte Gas zur CO-Konvertierung ohne weitere Dampfzugabe geeignet. Der Quench entfernt den Hauptanteil der Feststoffe, wie beispielsweise Ruß im Gas, und diese werden aus dem Quenchgefäß als Rußwasseraufschlämmung oder "Schwarzwasser" ausgeleitet.

Bei dem Texaco-Verfahren wird Ruß aus der Kohlenstoff-Wasser-Mischung mit Naphtha extrahiert und mit dem Ausgangsmaterial in den Reaktor zurückgeführt, wo es vollständig vergast wird. Das Schwarzwasser aus dem Quench und dem Wäscher wird abgekühlt und mit dem Naphtha in einem Dekanter in Kontakt gebracht. Hier nimmt das Naphtha den Ruß aus dem Wasser auf und hinterlässt dort den Hauptteil der in der Wasserphase vorhandenen Asche ("Grauwasser").

Das Ruß-Naphtha-Gemisch wird an der Oberseite des Dekanters abgezogen und mit frischem Öl-Einsatzmaterial gemischt. Das Naphtha wird in einer Destillationskolonne zurückgewonnen und in den Dekanter zurückgeführt, wobei die Ruß-Ölmischung als Sumpfprodukt zurückbleibt und zum Vergaser zurückgeführt wird.

Andere Vergasungsverfahren betreiben eine weniger aufwendige Behandlung des gewonnenen Ruß-Filterkuchens; es erfolgt aber zumindest eine Trocknung, bevor er verbrannt oder auf eine Deponie verbracht wird.

Die US-Patentschrift US 5670061 lehrt ebenfalls die Abtrennung von Vergasungsruß unter Erhalt einer wässrigen Aufschlämmung, die anschließend getrocknet und nachfolgend verbrannt wird.

Als kohlenstoffhaltige Einsatzstoffe der partiellen Oxidation können auch durch Pyrolyse von Biomasse erhaltene Pyrolyseöle und Pyrolyseteere verwendet werden. Der dabei ebenfalls gebildete, feste Pyrolysekoks kann entweder abgetrennt werden oder er verbleibt in Form feiner, suspendierter Partikel in dem Pyrolyseöl und Pyrolyseteer, wobei dann von Pyrolyseslurry oder Bioslurry gesprochen wird.

Die Einsatzstoffvorwärmung ist bei Vergasungsprozessen mittels partieller Oxidation eine wesentliche Maßnahme, um eine möglichst hohe Energieeffizienz für das Verfahren zu erzielen. Insbesondere bei der Vergasung von Flüssigbrennstoffen oder Bioslurries mit einer Viskosität von oberhalb von 50 mPas bei Umgebungstemperatur muss zur Erzielung einer guten Zerstäubung des in Vergasungsbrennern zumindest der kohlenstoffhaltige Einsatzstoffstrom vorgewärmt werden, um dessen Viskosität zu reduzieren.

Üblicherweise werden daher die Einsatzstoffströme, also der kohlenstoffhaltige Einsatzstoffstrom, der sauerstoffhaltige Oxidationsmittelstrom und ggf. der Moderatorstrom, separat mittels Heizdampf vorgewärmt. Im Fall der Rohgasabkühlung mittels eines Abhitzekessels steht genügend Hochdruckdampf für eine effektive Einsatzstoffvorwärmung zur Verfügung. Dagegen liefert die Abkühlung des erzeugten Rohsynthesegases mit einem Wasserquench nur Niedertemperaturwärme in Form von Quenchwasser, das bei üblichen Vergasungsdrücken von 25 bis 80 bar(a) typischerweise im Bereich von 150 bis 250 °C liegt. Daher muss in diesem Fall Heizdampf zur Vorwärmung der Einsatzströme von anderen Anlagenteilen importiert werden, was zur Erhöhung der Betriebskosten der Vergasungsanlage führt. Alternativ kann der benötigte Heizdampf durch Verbrennen eines Brennstoffes in einem Heizkessel erzeugt werden, wobei allerdings zusätzliche Anlagenkomponenten benötigt werden und sich die Schadstoffemissionen erhöhen würden. Schließlich könnte auch auf eine Vorwärmung verzichtet oder die Einsatzstoffe elektrisch vorgewärmt werden, was allerdings beides die Energiebilanz des Verfahrens verschlechtert und die Betriebskosten erhöht.

### Beschreibung der Erfindung

Die Aufgabe der vorliegenden Erfindung besteht daher darin, ein Verfahren zur Vergasung kohlenstoffhaltiger Brennstoffe vorzuschlagen, bei dem die Einsatzströme auf energiesparende, kostengünstige und möglichst umweltneutrale Weise vorgewärmt werden, so dass die oben erwähnten Nachteile vermieden werden.

Diese Aufgabe wird durch ein Verfahren mit den Merkmalen des Anspruchs 1 gelöst. Weitere Ausgestaltungen des erfindungsgemäßen Verfahrens ergeben sich aus den abhängigen Verfahrensansprüchen. Die Erfindung betrifft auch eine Anlage zur Durchführung des erfindungsgemäßen Verfahrens mit vorteilhaften Ausgestaltungen gemäß der abhängigen Anlagenansprüche.

### Erfindungsgemäßes Verfahren:

Verfahren zum Herstellen eines Wasserstoff und Kohlenoxide enthaltenden Rohsynthesegases durch nichtkatalytische Partialoxidation eines festen, flüssigen oder gasförmigen, kohlenstoffhaltigen Einsatzstromes mit einem sauerstoffhaltigen Oxidationsmittel,
umfassend folgende Schritte:
   (a) Bereitstellen des kohlenstoffhaltigen Einsatzstromes in fluider oder fluidisierter Form, Bereitstellen eines Oxidationsmittelstromes, optional Bereitstellen eines Moderatorstromes, umfassend Wasserdampf und/oder Kohlendioxid,
   (b) Bereitstellen eines Partialoxidationsreaktors, umfassend eine Reaktionskammer mit einem Einlass und einem Auslass, einen am Einlass der Reaktionskammer angeordneten Brenner und eine stromabwärts des Auslasses der Reaktionskammer angeordnete und mit dieser in Fluidverbindung stehende Abkühlkammer,
   (c) Bereitstellen eines kalten, Wasser enthaltendem Quenchmittelstromes,
   (d) Einleiten des kohlenstoffhaltigen Einsatzstromes, des Oxidationsmittelstromes und des optionalen Moderatorstromes in die Reaktionskammer über den Brenner,
   (e) mindestens teilweises Umsetzen des kohlenstoffhaltigen Einsatzstromes mit dem Oxidationsmittelstrom unter Partialoxidationsbedingungen im Brenner und/oder in der stromabwärts des Brenners angeordneten Reaktionskammer zu einem heißen Rohsynthesegasstrom,
   (f) Ausleiten des heißen Rohsynthesegasstroms aus der Reaktionskammer und Einleiten desselben in die Abkühlkammer,
   (g) Beaufschlagen des heißen Rohsynthesegasstroms in der Abkühlkammer mit dem kalten, Wasser enthaltendem Quenchmittelstrom, wobei ein kalter Rohsynthesegasstrom und ein Strom heißen, flüssigen, mit Feststoffpartikeln beladenen Quenchmittels erhalten werden,
   (h) Ausleiten des kalten Rohsynthesegasstroms aus dem Partialoxidationsreaktor zur Weiterverarbeitung oder Weiterbehandlung,
   (i) Ausleiten des heißen, flüssigen, mit Feststoffpartikeln beladenen Quenchmittelstroms aus dem Partialoxidationsreaktor und Einleiten mindestens eines Teils des heißen Quenchmittelstroms in einen ersten Wärmetauscher zwecks Abkühlung des heißen Quenchmittelstroms durch indirekten Wärmetausch gegen ein erstes Kühlmittel unter Erhalt des kalten Quenchmittelstroms, wobei der erste Wärmetauscher ausgewählt ist aus der Gruppe:
      (i1) Kreuzstromwärmetauscher, wobei das Kühlmittel durch Rohre geführt wird, die von dem heißen Quenchmittelstrom umströmt werden,
      (i2) Rohrbündelwärmetauscher, wobei das Kühlmittel die Rohrseite durchströmt und der heiße Quenchmittelstrom die Mantelseite durchströmt,
      (i3) Spiralwärmetauscher,
      wobei als erstes Kühlmittel der kohlenstoffhaltige Einsatzstrom oder der Oxidationsmittelstrom oder der Moderatorstrom oder mehrere dieser Ströme dienen, die dabei vor dem Einleiten in den Brenner vorgewärmt werden,
   (j) Ausleiten des kalten Quenchmittelstroms aus dem ersten Wärmetauscher und Rückführen mindestens eines Teils des kalten Quenchmittelstroms zu der Abkühlkammer, wodurch ein Quenchmittelstrom-Kreislauf gebildet wird.

### Erfindungsgemäße Anlage:

Anlage zum Herstellen eines Wasserstoff und Kohlenoxide enthaltenden Rohsynthesegases durch nichtkatalytische Partialoxidation eines festen, flüssigen oder gasförmigen, kohlenstoffhaltigen Einsatzstromes mit einem sauerstoffhaltigen Oxidationsmittel, umfassend folgende Bestandteile:
(a) Mittel zum Bereitstellen des kohlenstoffhaltigen Einsatzstromes in fluider oder fluidisierter Form, Mittel zum Bereitstellen eines Oxidationsmittelstromes, optional Mittel zum Bereitstellen eines Moderatorstromes, umfassend Wasserdampf und/oder Kohlendioxid,
(b) einen Partialoxidationsreaktor, umfassend eine Reaktionskammer mit einem Einlass und einem Auslass, einen am Einlass der Reaktionskammer angeordneten Brenner und eine stromabwärts des Auslasses der Reaktionskammer angeordnete und mit dieser in Fluidverbindung stehende Abkühlkammer,
(c) Mittel zum Bereitstellen eines kalten, Wasser enthaltendem Quenchmittelstromes,
(d) Mittel zum Einleiten des kohlenstoffhaltigen Einsatzstromes, des Oxidationsmittelstromes und des optionalen Moderatorstromes in den Brenner,
(e) Mittel zum Ausleiten eines heißen Rohsynthesegasstroms aus der Reaktionskammer und Mittel zum Einleiten desselben in die Abkühlkammer,
(f) Mittel zum Beaufschlagen des heißen Rohsynthesegasstroms in der Abkühlkammer mit dem kalten, Wasser enthaltendem Quenchmittelstrom,
(g) Mittel zum Ausleiten eines kalten Rohsynthesegasstroms aus dem Partialoxidationsreaktor,
(h) Mittel zum Ausleiten eines heißen, flüssigen, mit Feststoffpartikeln beladenen Quenchmittelstroms aus dem Partialoxidationsreaktor, ein erster Wärmetauscher, Mittel zum Einleiten mindestens eines Teils des heißen Quenchmittelstroms in den ersten Wärmetauscher, wobei der erste Wärmetauscher ausgewählt ist aus der Gruppe:
   (h1) Kreuzstromwärmetauscher, so ausgestaltet, dass das Kühlmittel durch Rohre geführt wird, die von dem heißen Quenchmittelstrom umströmt werden,
   (h2) Rohrbündelwärmetauscher, so ausgestaltet, dass das Kühlmittel die Rohrseite durchströmt und der heiße Quenchmittelstrom die Mantelseite durchströmt,
   (h3) Spiralwärmetauscher,
   Mittel zum Zuführen des kohlenstoffhaltigen Einsatzstroms oder des Oxidationsmittelstroms oder des Moderatorstroms oder mehrerer dieser Ströme als erstes Kühlmittel zu dem ersten Wärmetauscher,
(j) Mittel zum Ausleiten des kalten Quenchmittelstroms aus dem ersten Wärmetauscher und Mittel zum Rückführen mindestens eines Teils des kalten Quenchmittelstroms zu der Abkühlkammer.

Unter den Partialoxidationsbedingungen bzw. den Vergasungsbedingungen sind die dem Fachmann an sich bekannten Reaktions- und Verfahrensbedingungen, insbesondere von Temperatur, Druck und Verweilzeit, zu verstehen, wie sie detailliert im einschlägigen Schrifttum erörtert werden und bei denen mindestens ein Teilumsatz, bevorzugt allerdings technisch relevante Umsätze der Edukte in Synthesegasprodukte wie CO und Wasserstoff erfolgt.

Unter Fluidverbindung zwischen zwei Bereichen oder Anlagenteilen wird dabei jegliche Art von Verbindung verstanden, die es ermöglicht, dass ein Fluid, beispielsweise ein Reaktionsprodukt oder eine Kohlenwasserstofffraktion, von dem einen zu dem anderen der beiden Bereiche strömen kann, unbeachtlich etwaiger zwischengeschalteter Bereiche, Bauteile oder benötigter Fördermittel.

Als Fluide werden Substanzen bezeichnet, die sich unter dem Einfluss von Scherkräften kontinuierlich verformen, so dass sie fließen. Der Begriff "fluidisiert" weist in diesem Zusammenhang darauf hin, dass feinteilige, beispielsweise partikelförmige Feststoffe wie Schüttungen, durch verfahrenstechnische Maßnahmen wie Vermischen in einen fluidähnlichen Zustand verbracht werden, so dass sie förderfähig sind und sich gemeinsam mit der fluiden Phase bewegen.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Die genannten Aggregatzustände fest, flüssig und gasförmig bzw. dampfförmig sind immer in Bezug auf die lokalen physikalischen Bedingungen zu verstehen, die bei dem jeweiligen Verfahrensschritt oder in dem jeweiligen Anlagenteil herrschen, sofern nichts anderes angegeben ist. Im Rahmen der vorliegenden Anmeldung sind die Aggregatzustände gasförmig bzw. dampfförmig als synonym zu betrachten.

Druckangaben in der Einheit bar(a) beziehen sich auf den Absolutdruck in bar, absolut.

Der Erfindung liegt die Erkenntnis zugrunde, dass der heiße Quenchmittelstrom ausreichend Energie zur Vorwärmung des kohlenstoffhaltigen Einsatzstromes, des Oxidationsmittelstromes sowie eines optionalen Moderatorstromes zur Verfügung stellt. Der heiße Quenchmittelstrom stellt einen Wärmeträger dar, der bei heutigen Anlagen nicht genutzt wird. Das vorgestellte Verfahren ermöglicht die Nutzung des bislang als Wärmeträger ungenutzten Wassers. Dabei ist insbesondere bei thermisch instabilen oder zu Verkokung neigenden flüssigen Einsatzstoffen eine temperaturspitzenvermeidende, möglichst gleichmäßige Vorwärmung auf einem Temperaturniveau von ca. 200 °C möglich. Insbesondere wenn der Einsatzstoff zu thermisch induzierten Reaktionen, beispielsweise Polymerisationen neigt, wie dies z. B. bei Pyrolyseöl der Fall ist, ist die Verwendung dieses Wärmeträgers vorteilhaft, da die Vorwärmung auf einem geringeren Temperaturniveau erfolgt als bei der Vorwärmung mit Hochdruckdampf.

Der heiße Quenchmittelstrom wird entweder am Boden der Abkühlkammer oder an deren Seitenwand abgezogen. Bei stark feststoffbeladenem Quenchmittelstrom kann ggf. noch ein weiterer Absetzbehälter dem Quenchbereich angeschlossen sein. Dabei liegt die Temperatur des Quenchwassers in Abhängigkeit vom Vergasungsdruck im Bereich von 190 bis 250 °C. Bei sehr niedrigen Feststofffrachten (Ruß, Asche, Schlacke) kann heiße Quenchmittelstrom nach Kühlung direkt als Quenchmittel oder auch als Waschflüssigkeit an anderer Stelle im Verfahren oder in einem benachbarten Verfahren wiederverwendet werden. Bei höheren Frachten an Asche, Schlacke oder Ruß ist es dagegen vorteilhaft, vor dessen Wiederverwendung den heißen Quenchmittelstrom zu entspannen und seinen Feststoffanteil abzutrennen, beispielsweise durch Filtration mittels Bandfilter oder Filterpresse.

Hinsichtlich des zu verwendenden, ersten Wärmetauschers bieten sich aufgrund der relativ großen Menge an heißem Quenchmittel Kreuzstromwärmetauscher an, da sie die kleinste Wärmeübertragungsfläche benötigen, so dass trotz hoher Foulingfaktoren durch das feststoffbeladene Quenchmittel eine kompakte Bauweise realisierbar ist. Alternativ können auch Rohrbündelwärmetauscher eingesetzt werden, wobei das heiße, feststoffbeladene Quenchmittel auf der Mantelseite durch den Wärmetauscher geführt wird, so dass eine leichte Reinigung des Apparates möglich ist. Dabei ist zu beachten, dass der Rohrabstand (Pitch) ausreichend groß ist, um ein Blockieren oder Verlegen des Quenchwasserdurchgangs durch größere Feststoffpartikel (Ausmauerungsteile, Asche, Schlacke) verhindert wird.

Bei flüssigen Einsatzstoffen mit einer Neigung zum Polymerisation bzw. zum Verkoken (Rückstandsöle, Pyrolyseöle) hat sich herausgestellt, dass insbesondere Spiralwärmetauscher geeignet sind, da sie einfach zu reinigen sind und zudem aufgrund eines Selbstreinigungseffektes, der durch lokale Geschwindigkeitserhöhungen hervorgerufen wird, Ablagerungen effektiv verhindert werden.

### Bevorzugte Ausgestaltungen der Erfindung

Einer vorteilhafte Ausgestaltung des erfindungsgemäßen Verfahrens ist dadurch gekennzeichnet, dass mindestens ein zweiter Wärmetauscher zur Abkühlung des heißen Quenchmittelstroms durch indirekten Wärmetausch vorhanden ist, wobei der zweite Wärmetauscher mit einem zweiten Kühlmittel betrieben wird, das ausgewählt wird aus der Gruppe: Kohlenstoffhaltiger Einsatzstrom, Oxidationsmittelstrom, Moderatorstrom. Auf diese Weise kann ein weiterer Betriebsmittelstrom vorgewärmt werden und es besteht ein zusätzlicher Freiheitsgrad bei der Einstellung der Vorwärmtemperatur für diesen zusätzlichen Betriebsmittelstrom.

Ein weiterer Aspekt des erfindungsgemäßen Verfahrens ist dadurch gekennzeichnet, dass kontinuierlich oder absatzweise ein Anteil des heißen oder abgekühlten Quenchmittelstroms als Spülstrom oder Purgestrom aus dem Quenchmittelstrom-Kreislauf ausgeleitet wird und mengenmäßig durch Frischwasser oder durch feststofffreie Kondensatströme, beispielsweise Dampfkondensat, ersetzt wird. Hierdurch kann der Anreicherung bestimmter, insbesondere gelöster oder kolloidal dispergierter Verunreinigungen im Quenchmittelkreislauf vorgebeugt werden.

In weiterer vorteilhafter Ausgestaltung des erfindungsgemäßen Verfahrens wird der Quenchmittelstrom vor dem Rückführen zu der Abkühlkammer einer Vorrichtung zur Feststoffabscheidung zugeführt. Dies verringert die Verstopfungsneigung der für das Einleiten des kalten Quenchmittels in die Abkühlkammer verwendeten Vorrichtungen, beispielsweise Düsen.

Alternativ oder zusätzlich zu der letztgenannten Ausgestaltung sieht eine weitere vorteilhafte Ausgestaltung des erfindungsgemäßen Verfahrens vor, dass der heiße Quenchmittelstrom vor dem Einleiten in den ersten Wärmetauscher der Vorrichtung zur Feststoffabscheidung zugeführt wird. Auf diese Weise können Feststoffpartikel abgeschieden werden, so dass sich die Verstopfungsneigung des nachgeschalteten ersten Wärmetauschers reduziert und dieser länger ohne Betriebsstillstand zum Zwecke der Reinigung betrieben werden kann.

Alternativ oder zusätzlich zu den beiden letztgenannten Ausgestaltungen sieht eine weitere vorteilhafte Ausgestaltung des erfindungsgemäßen Verfahrens vor, dass der kalte Quenchmittelstrom nach dem Ausleiten aus dem ersten Wärmetauscher der Vorrichtung zur Feststoffabscheidung zugeführt wird. Auf diese Weise können insbesondere feinere Feststoffpartikel abgeschieden werden, die etwaige vorgeschaltete Feststoffabtrennungsstufen durchlaufen haben. Dies verringert die Verstopfungsneigung der für das Einleiten des kalten Quenchmittels in die Abkühlkammer verwendeten Vorrichtungen, beispielsweise Düsen.

Ein weiterer Aspekt des erfindungsgemäßen Verfahrens ist dadurch gekennzeichnet, dass bei Verwendung eines Rohrbündelwärmetauschers oder eines Kreuzstromwärmetauschers die von dem Kühlmittel durchströmten Rohre senkrecht angeordnet werden und das heiße Quenchmedium im Kreuzstrom, Gleichstrom oder Gegenstrom relativ zur Strömungsrichtung des Kühlmittels geführt wird, wobei die Strömungsrichtung des Quenchmediums durch den Wärmetauscher im Wesentlichen senkrecht aufwärts oder abwärts verläuft und wobei an der Unterseite des Wärmetauschers ein Speichervolumen zur Aufnahme von Feststoffablagerungen und eine Revisionsöffnung zum Entfernen der Feststoffablagerungen vorgesehen ist. Durch die senkrechte Anordnung der von dem Kühlmittel durchströmten Rohre ist deren Verschmutzungsneigung besonders gering. Feststoffablagerungen setzen sich durch Sedimentation an der Unterseite des Wärmetauschers, beispielsweise in dem hierzu vorgesehenen Speichervolumen, ab und können über die Revisionsöffnung leicht entfernt werden. Falls die Revisionsöffnung als Schleuse ausgestaltet wird, kann sogar eine Feststoffentnahme im laufenden Betrieb des Verfahrens bzw. der Anlage erfolgen.

Ein weiterer Aspekt des erfindungsgemäßen Verfahrens ist dadurch gekennzeichnet, dass ein Pyrolyseöl oder Pyrolyseslurry als kohlenstoffhaltiger Einsatzstrom und ein Spiralwärmetauscher als erster Wärmetauscher verwendet wird. Bei solchen Einsatzstoffen mit einer Neigung zum Polymerisation bzw. zum Verkoken hat sich herausgestellt, dass insbesondere Spiralwärmetauscher geeignet sind, da sie einfach zu reinigen sind und zudem aufgrund eines Selbstreinigungseffektes, der durch lokale Geschwindigkeitserhöhungen hervorgerufen wird, Ablagerungen effektiv verhindert werden.

Ein weiterer Aspekt des erfindungsgemäßen Verfahrens ist dadurch gekennzeichnet, dass der Druck in der Reaktionskammer und in der Abkühlkammer zwischen 25 und 80 bar(a) liegt und die Temperatur des heißen Quenchmittelstroms zwischen 150 und 250 °C liegt. Es handelt sich hierbei um einen üblichen Betriebsdruck eines Partialoxidationsreaktors, der zu einer ökonomisch vorteilhaften Raum-Zeit-Ausbeute führt und auf nachgeschaltete Verfahrensstufen abgestimmt ist. Überraschenderweise eignet sich die Temperatur des dabei erhaltenen, heißen Quenchmittelstroms besonders vorteilhaft zur Vorwärmung von Betriebsmittelströmen, da Übertemperaturen vermieden werden, die zu unerwünschten Nebenreaktionen wie Polymerisation und Verkokung führen.

Ein weiterer Aspekt des erfindungsgemäßen Verfahrens ist dadurch gekennzeichnet, dass die Vorwärmtemperatur des kohlenstoffhaltigen Einsatzstromes vor Einleiten in den Brenner für gasförmige Einsatzströme zwischen 200 und 400 °C, für flüssige Einsatzströme zwischen 150 und 300 °C und für Pyrolyseöle oder Pyrolyseslurries als Einsatzstrom zwischen 20 und 150 °C beträgt. Untersuchungen haben gezeigt, dass durch Einhalten dieser Temperaturbereiche eine effiziente Vorwärmleistung bei gleichzeitiger Vermeidung einer Überhitzung des jeweiligen Mediums erhalten wird, wobei gasförmige Einsatzströme am wenigsten empfindlich und Pyrolyseöle oder Pyrolyseslurries besonders empfindlich gegenüber Überhitzungen sind.

Ein weiterer Aspekt des erfindungsgemäßen Verfahrens ist dadurch gekennzeichnet, dass die Vorwärmtemperatur des sauerstoffhaltigen Oxidationsmittels vor Einleiten in den Brenner zwischen 120 und 250 °C beträgt. Untersuchungen haben gezeigt, dass durch Einhalten dieses Temperaturbereichs eine besonders energieeffiziente Vorwärmung des Oxidationsmittelstroms erreicht wird.

In besonderer Ausgestaltung der erfindungsgemäßen Anlage umfasst diese einen zweiten Wärmetauscher, der in Fluidverbindung mit dem Quenchmittelstrom steht. Auf diese Weise kann ein weiterer Betriebsmittelstrom vorgewärmt werden und es besteht ein zusätzlicher Freiheitsgrad bei der Einstellung der Vorwärmtemperatur für diesen zusätzlichen Betriebsmittelstrom.

In weiterer besonderer Ausgestaltung der erfindungsgemäßen Anlage umfasst diese eine Vorrichtung zur Feststoffabscheidung, die in Fluidverbindung mit dem Quenchmittelstrom steht. Auf diese Weise können Feststoffpartikel abgeschieden werden, so dass sich die Verstopfungsneigung des nachgeschalteten ersten Wärmetauschers reduziert und dieser länger ohne Betriebsstillstand zum Zwecke der Reinigung betrieben werden kann.

Ein weiterer Aspekt der erfindungsgemäßen Anlage ist dadurch gekennzeichnet, dass bei dem Rohrbündelwärmetauscher oder der Kreuzstromwärmetauscher die von dem Kühlmittel durchströmten Rohre senkrecht angeordnet werden und an der Unterseite des Wärmetauschers ein Speichervolumen zur Aufnahme von Feststoffablagerungen und eine Revisionsöffnung zum Entfernen der Feststoffablagerungen vorgesehen ist. Durch die senkrechte Anordnung der von dem Kühlmittel durchströmten Rohre ist deren Verschmutzungsneigung besonders gering. Feststoffablagerungen setzen sich durch Sedimentation an der Unterseite des Wärmetauschers, beispielsweise in dem hierzu vorgesehenen Speichervolumen, ab und können über die Revisionsöffnung leicht entfernt werden. Falls die Revisionsöffnung als Schleuse ausgestaltet wird, kann sogar eine Feststoffentnahme im laufenden Betrieb des Verfahrens bzw. der Anlage erfolgen.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigt die einzige Figur:

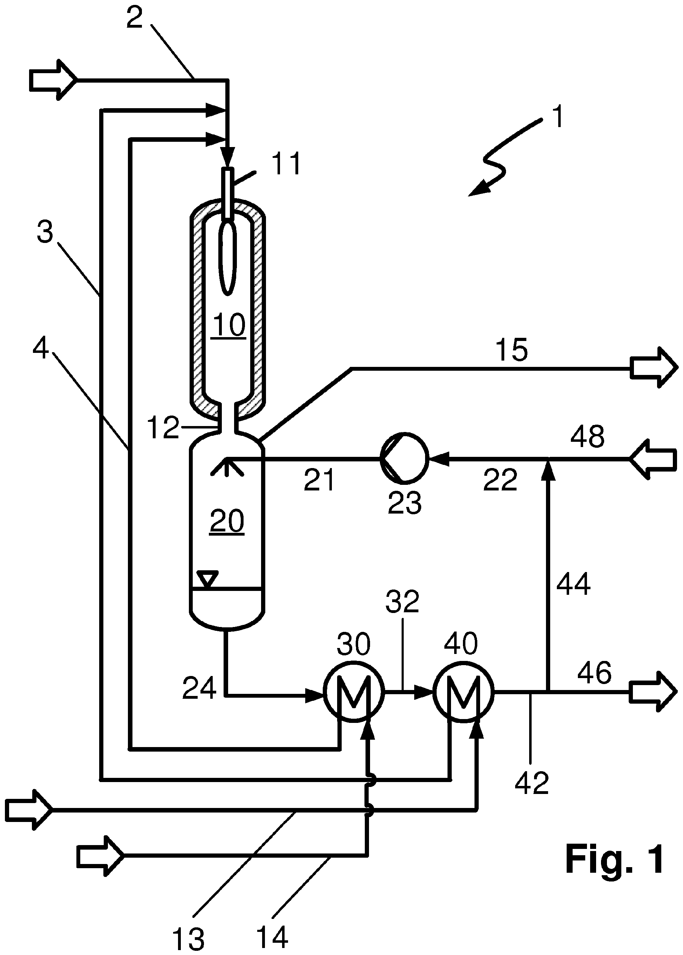

- Fig. 1: eine bevorzugte Ausgestaltung des erfindungsgemäßen Verfahrens bzw. der erfindungsgemäßen Anlage.

In der in Fig. 1 schematisch dargestellten Anlage 1 zur Synthesegaserzeugung durch nichtkatalytische Partialoxidation eines Pyrolyseöls als flüssiger, kohlenstoffhaltiger Einsatzstrom werden der Reaktionskammer 10 über den Brenner 11 die Medien Pyrolyseöl über Leitungen 13 und 3, Wasserdampf als Moderator über Leitung 2 und Sauerstoff als Oxidationsmittel über Leitungen 14 und 4 zugeführt. Die detaillierte Medienführung ist in der Figur bildlich nicht dargestellt; so kann stromaufwärts des Brenners oder im Brenner selber eine Vorvermischung eines oder mehrerer der Medien, beispielsweise des Pyrolyseöls oder des Oxidationsmittels oder beider, mit dem Moderator erfolgen, wobei als Moderator Wasserdampf oder Kohlendioxid oder Mischungen dieser Stoffe verwendet wird.

Die Umsetzung des Pyrolyseöls mit dem Oxidationsmittel zu einem Rohsynthesegas erfolgt unter Partialoxidationsbedingungen im Brenner 11 und/oder in der stromabwärts des Brenners angeordneten Reaktionskammer 10 zu einem heißen Rohsynthesegasstrom. Das mit Rußpartikeln beladene Rohsynthesegas tritt über Verbindungsleitung 12 in die Abkühlkammer 20 ein, die als Quench ausgestaltet ist. Hier erfolgt die schlagartige Absenkung der Temperatur des Rohsynthesegases durch Versprühen von Wasser, das über Leitungen 21 und 22 als kalter Quenchmittelstrom herangeführt wird, auf eine Temperatur zwischen 150 und 250 °C bei einem typischen Druck zwischen 25 und 80 bar(a). Das dabei erhaltene, abgekühlte und von Feststoffpartikeln weitgehend befreite Rohsynthesegas wird nachfolgend über Leitung 15 aus der Partialoxidationsanlage ausgeleitet und der Weiterverarbeitung oder Weiterbehandlung zugeführt.

Das heiße, flüssige, mit Feststoffpartikeln beladene Quenchmittel sammelt sich im unteren Bereich der Abkühlkammer und bildet dort einen Flüssigkeitsstand. Das heiße Quenchmittel wird sodann über Leitung 24 aus der Abkühlkammer 20 ausgeleitet und über Leitung 24 zum ersten Wärmetauscher 30 geführt. Falls das heiße Quenchmittel wie gezeigt am tiefsten Punkt der Abkühlkammer 20 ausgeleitet wird, ist es von Vorteil, dieses zunächst einer bildlich nicht dargestellten Vorrichtung zur Feststoffabtrennung aufzugeben, um zumindest einen Teil der mitgeführten Feststoffpartikel abzuscheiden, bevor das heiße Quenchmittel weiter zum ersten Wärmetauscher 30 geführt wird. Auf diese Weise können insbesondere Feststoff-Grobanteile von dem ersten Wärmetauscher 30 ferngehalten werden.

Alternativ ist es möglich, das heiße, partikelbeladene Quenchmittel nicht am tiefsten Punkt aus der Abkühlkammer 20 auszuleiten, sondern etwas oberhalb davon. Vorteilhaft ist es dabei, dass auf diese Weise eine gewisse Feststoff-Vorabtrennung erfolgt, so dass der erste Wärmetauscher 30 mit weniger Feststoff beaufschlagt wird. Der sich an der tiefsten Stelle der Abkühlkammer über Sedimentation ablagernde Feststoff kann dann kontinuierlich oder diskontinuierlich und separat von dem heißen Quenchmittel aus der Abkühlkammer ausgeschleust werden. Eine kontinuierliche Ausschleusung kann beispielsweise über eine Zellenradschleuse realisiert werden. Diese Feststoff-Vorabscheidung kann noch dadurch verstärkt werden, dass der Unterteil der Abkühlkammer als Beruhigungszone ausgestaltet wird, beispielsweise durch Verwendung von Einbauten wie Trennblechen. Da im vorliegenden Ausführungsbeispiel Pyrolyseöl als flüssiger, kohlenstoffhaltiger Einsatzstrom der Partialoxidation verwendet wird, ist es vorteilhaft, Wärmetauscher 30 oder 40 oder beide als Spiralwärmetauscher auszugestalten. Bei solchen Einsatzstoffen mit einer Neigung zum Polymerisation bzw. zum Verkoken hat sich herausgestellt, dass insbesondere Spiralwärmetauscher geeignet sind, da sie einfach zu reinigen sind und zudem aufgrund eines Selbstreinigungseffektes, der durch lokale Geschwindigkeitserhöhungen hervorgerufen wird, Ablagerungen effektiv verhindert werden.

Falls der erste und/oder der zweite Wärmetauscher als Kreuzstrom- oder Rohrbündelwärmetauscher ausgestaltet werden, ist es vorteilhaft, die von dem Kühlmittel durchströmten Rohre senkrecht anzuordnen und das heiße Quenchmedium im Kreuzstrom, Gleichstrom oder Gegenstrom relativ zur Strömungsrichtung des Kühlmittels zu führen, wobei die Strömungsrichtung des Quenchmediums durch den Wärmetauscher im Wesentlichen senkrecht aufwärts oder abwärts verlaufen sollte und wobei in vorteilhafter Weise an der Unterseite des Wärmetauschers ein Speichervolumen zur Aufnahme von Feststoffablagerungen und eine Revisionsöffnung zum Entfernen der Feststoffablagerungen vorgesehen ist. Durch die senkrechte Anordnung der von dem Kühlmittel durchströmten Rohre ist deren Verschmutzungsneigung besonders gering. Feststoffablagerungen setzen sich durch Sedimentation an der Unterseite des Wärmetauschers, beispielsweise in dem hierzu vorgesehenen Speichervolumen, ab und können über die Revisionsöffnung leicht entfernt werden. Falls die Revisionsöffnung als Schleuse ausgestaltet wird, kann sogar eine Feststoffentnahme im laufenden Betrieb des Verfahrens bzw. der Anlage erfolgen.

Im ersten Wärmetauscher 30 erfolgt eine erste Teilabkühlung des heißen Quenchmittels im indirekten Wärmetausch gegen den über Leitung 14 herangeführten Oxidationsmittelstrom als erstes Kühlmittel, das auf diese Weise vorerwärmt und über Leitung 4 zum Brenner 11 geführt wird. Das teilabgekühlte Quenchmittel wird dann über Leitung 32 zum zweiten Wärmetauscher 40. Im zweiten Wärmetauscher 40 erfolgt die weitere Teilabkühlung des Quenchmittels im indirekten Wärmetausch gegen den über Leitung 13 herangeführten, kohlenstoffhaltigen Einsatzstromes (hier Pyrolyseöl) als zweites Kühlmittel, das auf diese Weise ebenfalls vorerwärmt und über Leitung 3 zum Brenner 11 geführt wird. Das kalte Quenchmittel wird über Leitung 42 aus dem zweiten Wärmetauscher 40 ausgeleitet und über Leitungen 44, 22, 21 und Pumpe 23 als kaltes Quenchmittel zu der Abkühlkammer 20 zurückgeführt, wodurch ein geschlossener Quenchmittelkreislauf gebildet wird. Dabei wird ein gegenüber dem umlaufenden Mengenstrom des Quenchmittels kleiner Anteil kontinuierlich über Leitung 46 aus dem Verfahren ausgeleitet, um eine Kontamination des zirkulierenden Quenchmittels durch Feststoff-Feinanteile und unerwünschte gelöste Stoffe zu begrenzen. Der ausgeleitete Mengenstrom des Quenchmittels wird kontinuierlich über Leitung 48 durch Frischwasser ersetzt.

Besondere Vorteile bietet die gezeigte Wahl des ersten und des zweiten Kühlmittels: Das gegenüber einer Überhitzung weniger empfindliche Oxidationsmittel trifft als erstes Kühlmittel im ersten Wärmetauscher auf den noch heißen Quenchmittelstrom, während im zweiten Wärmetauscher das bereits teilabgekühlte Quenchmittel mit Pyrolyseöl als zweites Kühlmittel weiter abgekühlt wird. Auf diese Weise wird das Pyrolyseöl als kohlenstoffhaltiger Einsatzstrom zwar vorgewärmt, aber eine Überhitzung vermieden, die aufgrund der Reaktivität einiger Inhaltsstoffe zu unerwünschten Nebenreaktionen führen kann.

### Gewerbliche Anwendbarkeit

Mit der Erfindung wird ein vorteilhaftes Verfahren zur Herstellung eines Synthesegases durch partielle Oxidation fester, flüssiger oder gasförmiger, kohlenstoffhaltiger Einsatzströme vorgeschlagen, bei dem eine hohe Wärmeintegration durch Nutzung des heißen Quenchmittels zur Vorwärmung von Betriebsströmen erreicht wird.

### Bezugszeichenliste

- [1]: Anlage
- [2] - [4]: Leitung
- [10]: Reaktionskammer des Partialoxidationsreaktors
- [11]: Brenner
- [12] - [15]: Leitung
- [20]: Abkühlkammer des Partialoxidationsreaktors
- [13] - [14]: Leitung
- [21] - [22]: Leitung
- [23]: Pumpe
- [24]: Leitung
- [30]: erster Wärmetauscher
- [32]: Leitung
- [40]: zweiter Wärmetauscher
- [42] - [48]: Leitung

## Patentansprüche

1. Verfahren zum Herstellen eines Wasserstoff und Kohlenoxide enthaltenden Rohsynthesegases durch nichtkatalytische Partialoxidation eines festen, flüssigen oder gasförmigen, kohlenstoffhaltigen Einsatzstromes mit einem sauerstoffhaltigen Oxidationsmittel, umfassend folgende Schritte:
(a) Bereitstellen des kohlenstoffhaltigen Einsatzstromes in fluider oder fluidisierter Form, Bereitstellen eines Oxidationsmittelstromes, optional Bereitstellen eines Moderatorstromes, umfassend Wasserdampf und/oder Kohlendioxid,
(b) Bereitstellen eines Partialoxidationsreaktors, umfassend eine Reaktionskammer mit einem Einlass und einem Auslass, einen am Einlass der Reaktionskammer angeordneten Brenner und eine stromabwärts des Auslasses der Reaktionskammer angeordnete und mit dieser in Fluidverbindung stehende Abkühlkammer,
(c) Bereitstellen eines kalten, Wasser enthaltendem Quenchmittelstromes,
(d) Einleiten des kohlenstoffhaltigen Einsatzstromes, des Oxidationsmittelstromes und des optionalen Moderatorstromes in die Reaktionskammer über den Brenner,
(e) mindestens teilweises Umsetzen des kohlenstoffhaltigen Einsatzstromes mit dem Oxidationsmittelstrom unter Partialoxidationsbedingungen im Brenner und/oder in der stromabwärts des Brenners angeordneten Reaktionskammer zu einem heißen Rohsynthesegasstrom,
(f) Ausleiten des heißen Rohsynthesegasstroms aus der Reaktionskammer und Einleiten desselben in die Abkühlkammer,
(g) Beaufschlagen des heißen Rohsynthesegasstroms in der Abkühlkammer mit dem kalten, Wasser enthaltendem Quenchmittelstrom, wobei ein kalter Rohsynthesegasstrom und ein Strom heißen, flüssigen, mit Feststoffpartikeln beladenen Quenchmittels erhalten werden,
(h) Ausleiten des kalten Rohsynthesegasstroms aus dem Partialoxidationsreaktor zur Weiterverarbeitung oder Weiterbehandlung,
(i) Ausleiten des heißen, flüssigen, mit Feststoffpartikeln beladenen Quenchmittelstroms aus dem Partialoxidationsreaktor und Einleiten mindestens eines Teils des heißen Quenchmittelstroms in einen ersten Wärmetauscher zwecks Abkühlung des heißen Quenchmittelstroms durch indirekten Wärmetausch gegen ein erstes Kühlmittel unter Erhalt des kalten Quenchmittelstroms, wobei der erste Wärmetauscher ausgewählt ist aus der Gruppe:
(i1) Kreuzstromwärmetauscher, wobei das Kühlmittel durch Rohre geführt wird, die von dem heißen Quenchmittelstrom umströmt werden,
(i2) Rohrbündelwärmetauscher, wobei das Kühlmittel die Rohrseite durchströmt und der heiße Quenchmittelstrom die Mantelseite durchströmt,
(i3) Spiralwärmetauscher,
wobei als erstes Kühlmittel der kohlenstoffhaltige Einsatzstrom oder der Oxidationsmittelstrom oder der Moderatorstrom oder mehrere dieser Ströme dienen, die dabei vor dem Einleiten in den Brenner vorgewärmt werden,
(j) Ausleiten des kalten Quenchmittelstroms aus dem ersten Wärmetauscher und Rückführen mindestens eines Teils des kalten Quenchmittelstroms zu der Abkühlkammer, wodurch ein Quenchmittelstrom-Kreislauf gebildet wird.

2. Verfahren nach Anspruch 1, **dadurch gekennzeichnet, dass** mindestens ein zweiter Wärmetauscher zur Abkühlung des heißen Quenchmittelstroms durch indirekten Wärmetausch vorhanden ist, wobei der zweite Wärmetauscher mit einem zweiten Kühlmittel betrieben wird, das ausgewählt wird aus der Gruppe: Kohlenstoffhaltiger Einsatzstrom, Oxidationsmittelstrom, Moderatorstrom.

3. Verfahren nach Anspruch 1 oder 2, **dadurch gekennzeichnet, dass** kontinuierlich oder absatzweise ein Anteil des heißen oder abgekühlten Quenchmittelstroms als Spülstrom oder Purgestrom aus dem Quenchmittelstrom-Kreislauf ausgeleitet wird und mengenmäßig durch Frischwasser oder feststofffreie Kondensatströme ersetzt wird.

4. Verfahren nach Anspruch 1 bis 3, **dadurch gekennzeichnet, dass** der Quenchmittelstrom vor dem Rückführen zu der Abkühlkammer einer Vorrichtung zur Feststoffabscheidung zugeführt wird.

5. Verfahren nach Anspruch 4, **dadurch gekennzeichnet, dass** der heiße Quenchmittelstrom vor dem Einleiten in den ersten Wärmetauscher der Vorrichtung zur Feststoffabscheidung zugeführt wird.

6. Verfahren nach Anspruch 4, **dadurch gekennzeichnet, dass** der kalte Quenchmittelstrom nach dem Ausleiten aus dem ersten Wärmetauscher der Vorrichtung zur Feststoffabscheidung zugeführt wird.

7. Verfahren nach Anspruch 1 bis 6, **dadurch gekennzeichnet, dass** bei Verwendung eines Rohrbündelwärmetauschers oder eines Kreuzstromwärmetauschers die von dem Kühlmittel durchströmten Rohre senkrecht angeordnet werden und das heiße Quenchmedium im Kreuzstrom, Gleichstrom oder Gegenstrom relativ zur Strömungsrichtung des Kühlmittels geführt wird, wobei die Strömungsrichtung des Quenchmediums durch den Wärmetauscher im Wesentlichen senkrecht aufwärts oder abwärts verläuft und wobei an der Unterseite des Wärmetauschers ein Speichervolumen zur Aufnahme von Feststoffablagerungen und eine Revisionsöffnung zum Entfernen der Feststoffablagerungen vorgesehen ist.

8. Verfahren nach Anspruch 1 bis 6, **dadurch gekennzeichnet, dass** ein Pyrolyseöl oder Pyrolyseslurry als kohlenstoffhaltiger Einsatzstrom und ein Spiralwärmetauscher als erster Wärmetauscher verwendet wird.

9. Verfahren nach einem der vorigen Ansprüche, **dadurch gekennzeichnet, dass** der Druck in der Reaktionskammer und in der Abkühlkammer zwischen 25 und 80 bar(a) liegt und die Temperatur des heißen Quenchmittelstroms zwischen 150 und 250 °C liegt.

10. Verfahren nach einem der vorigen Ansprüche, **dadurch gekennzeichnet, dass** die Vorwärmtemperatur des kohlenstoffhaltigen Einsatzstromes vor Einleiten in den Brenner für gasförmige Einsatzströme zwischen 200 und 400 °C, für flüssige Einsatzströme zwischen 150 und 300 °C und für Pyrolyseöle oder Pyrolyseslurries als Einsatzstrom zwischen 20 und 150 °C beträgt.

11. Verfahren nach einem der vorigen Ansprüche, **dadurch gekennzeichnet, dass** die Vorwärmtemperatur des sauerstoffhaltigen Oxidationsmittels vor Einleiten in den Brenner zwischen 120 und 250 °C beträgt.

12. Anlage zum Herstellen eines Wasserstoff und Kohlenoxide enthaltenden Rohsynthesegases durch nichtkatalytische Partialoxidation eines festen, flüssigen oder gasförmigen, kohlenstoffhaltigen Einsatzstromes mit einem sauerstoffhaltigen Oxidationsmittel, umfassend folgende Bestandteile:
(a) Mittel zum Bereitstellen des kohlenstoffhaltigen Einsatzstromes in fluider oder fluidisierter Form, Mittel zum Bereitstellen eines Oxidationsmittelstromes, optional Mittel zum Bereitstellen eines Moderatorstromes, umfassend Wasserdampf und/oder Kohlendioxid,
(b) einen Partialoxidationsreaktor, umfassend eine Reaktionskammer mit einem Einlass und einem Auslass, einen am Einlass der Reaktionskammer angeordneten Brenner und eine stromabwärts des Auslasses der Reaktionskammer angeordnete und mit dieser in Fluidverbindung stehende Abkühlkammer,
(c) Mittel zum Bereitstellen eines kalten, Wasser enthaltendem Quenchmittelstromes,
(d) Mittel zum Einleiten des kohlenstoffhaltigen Einsatzstromes, des Oxidationsmittelstromes und des optionalen Moderatorstromes in den Brenner,
(e) Mittel zum Ausleiten eines heißen Rohsynthesegasstroms aus der Reaktionskammer und Mittel zum Einleiten desselben in die Abkühlkammer,
(f) Mittel zum Beaufschlagen des heißen Rohsynthesegasstroms in der Abkühlkammer mit dem kalten, Wasser enthaltendem Quenchmittelstrom,
(g) Mittel zum Ausleiten eines kalten Rohsynthesegasstroms aus dem Partialoxidationsreaktor,
(h) Mittel zum Ausleiten eines heißen, flüssigen, mit Feststoffpartikeln beladenen Quenchmittelstroms aus dem Partialoxidationsreaktor, ein erster Wärmetauscher, Mittel zum Einleiten mindestens eines Teils des heißen Quenchmittelstroms in den ersten Wärmetauscher, wobei der erste Wärmetauscher ausgewählt ist aus der Gruppe:
(h1) Kreuzstromwärmetauscher, so ausgestaltet, dass das Kühlmittel durch Rohre geführt wird, die von dem heißen Quenchmittelstrom umströmt werden,
(h2) Rohrbündelwärmetauscher, so ausgestaltet, dass das Kühlmittel die Rohrseite durchströmt und der heiße Quenchmittelstrom die Mantelseite durchströmt,
(h3) Spiralwärmetauscher,
Mittel zum Zuführen des kohlenstoffhaltigen Einsatzstroms oder des Oxidationsmittelstroms oder des Moderatorstroms oder mehrerer dieser Ströme als erstes Kühlmittel zu dem ersten Wärmetauscher,
(j) Mittel zum Ausleiten des kalten Quenchmittelstroms aus dem ersten Wärmetauscher und Mittel zum Rückführen mindestens eines Teils des kalten Quenchmittelstroms zu der Abkühlkammer.

13. Anlage nach Anspruch 12, **dadurch gekennzeichnet, dass** sie einen zweiten Wärmetauscher umfasst, der in Fluidverbindung mit dem Quenchmittelstrom steht.

14. Anlage nach Anspruch 12 oder 13, **dadurch gekennzeichnet, dass** sie eine Vorrichtung zur Feststoffabscheidung umfasst, die in Fluidverbindung mit dem Quenchmittelstrom steht.

15. Anlage nach Anspruch 12 bis 14, **dadurch gekennzeichnet, dass** bei dem Rohrbündelwärmetauscher oder der Kreuzstromwärmetauscher die von dem Kühlmittel durchströmten Rohre senkrecht angeordnet werden und an der Unterseite des Wärmetauschers ein Speichervolumen zur Aufnahme von Feststoffablagerungen und eine Revisionsöffnung zum Entfernen der Feststoffablagerungen vorgesehen ist.

## Claims

1. Process for producing a raw synthesis gas containing hydrogen and carbon oxides by noncatalytic partial oxidation of a solid, liquid or gaseous carbon-containing input stream with an oxygen-containing oxidant, comprising the following steps:
(a) providing the carbon-containing input stream in fluid or fluidized form, providing an oxidant stream, optionally providing a moderator stream comprising steam and/or carbon dioxide,
(b) providing a partial oxidation reactor comprising a reaction chamber having an inlet and an outlet, a burner arranged at the inlet of the reaction chamber and a cooling chamber arranged downstream of the outlet of the reaction chamber and in fluid connection therewith,
(c) providing a cold, water-containing quench medium stream,
(d) introducing the carbon-containing input stream, the oxidant stream and the optional moderator stream into the reaction chamber via the burner,
(e) at least partially reacting the carbon-containing input stream with the oxidant stream under partial oxidation conditions in the burner and/or in the reaction chamber arranged downstream of the burner to afford a hot raw synthesis gas stream,
(f) discharging the hot raw synthesis gas stream from the reaction chamber and introducing same into the cooling chamber,
(g) subjecting the hot raw synthesis gas stream in the cooling chamber to the cold, water-containing quench medium stream to obtain a cold raw synthesis gas stream and a stream of hot, liquid quench medium laden with solids particles,
(h) discharging the cold raw synthesis gas stream from the partial oxidation reactor for further processing or further treatment,
(i) discharging the hot, liquid quench medium stream laden with solids particles from the partial oxidation reactor and introducing at least a portion of the hot quench medium stream into a first heat exchanger for cooling the hot quench medium stream by indirect heat exchange against a first coolant to obtain the cold quench medium stream, wherein the first heat exchanger is selected from the group of:
(i1) crossflow heat exchangers, wherein the coolant is passed through tubes which have the hot quench medium stream flowing around them,
(i2) shell and tube heat exchangers, wherein the coolant flows through the tube side and the hot quench medium stream flows through the shell side,
(i3) spiral heat exchangers,
wherein the carbon-containing input stream or the oxidant stream or the moderator stream or a plurality of these streams serve as the first coolant and are thus preheated before introduction into the burner,
(j) discharging the cold quench medium stream from the first heat exchanger and recycling at least a portion of the cold quench medium stream to the cooling chamber to form a quench medium stream circuit.

2. Process according to Claim 1, **characterized in that** at least a second heat exchanger for cooling the hot quench medium stream by indirect heat exchange is pre-sent, wherein the second heat exchanger is operated with a second coolant selected from the group of: carbon-containing input stream, oxidant stream, moderator stream.

3. Process according to Claim 1 or 2, **characterized in that** a proportion of the hot or cooled quench medium stream is discharged continuously or batchwise from the quench medium stream circuit as a purge stream and is quantitatively replaced by fresh water or solids-free condensate streams.

4. Process according to Claims 1 to 3, **characterized in that** the quench medium stream is supplied to an apparatus for solids separation before recycling to the cooling chamber.

5. Process according to Claim 4, **characterized in that** the hot quench medium stream is supplied to the apparatus for solids separation before introduction into the first heat exchanger.

6. Process according to Claim 4, **characterized in that** the cold quench medium stream is supplied to the apparatus for solids separation after discharging from the first heat exchanger.

7. Process according to Claims 1 to 6, **characterized in that** when using a shell and tube heat exchanger or a crossflow heat exchanger the tubes traversed by the coolant are arranged vertically and the hot quench medium is run in crossflow, cocurrent or countercurrent relative to the flow direction of the coolant, wherein the flow direction of the quench medium through the heat exchanger is substantially vertically upwards or downwards and wherein a storage volume for accommodating solids deposits and a service opening for removing the solids deposits are provided at the bottom of the heat exchanger.

8. Process according to Claims 1 to 6, **characterized in that** a pyrolysis oil or pyrolysis slurry is used as the carbon-containing input stream and a spiral heat exchanger is used as the first heat exchanger.

9. Process according to any of the preceding claims, **characterized in that** the pressure in the reaction chamber and in the cooling chamber is between 25 and 80 bar(a) and the temperature of the hot quench medium stream is between 150°C and 250°C.

10. Process according to any of the preceding claims, **characterized in that** the preheating temperature of the carbon-containing input stream before introduction into the burner is between 200°C and 400°C for gaseous input streams, between 150°C and 300°C for liquid input streams and between 20°C and 150°C for pyrolysis oils or pyrolysis slurries as the input stream.

11. Process according to any of the preceding claims, **characterized in that** the preheating temperature of the oxygen-containing oxidant before introduction into the burner is between 120°C and 250°C.

12. Plant for producing a raw synthesis gas containing hydrogen and carbon oxides by noncatalytic partial oxidation of a solid, liquid or gaseous carbon-containing input stream with an oxygen-containing oxidant, comprising the following constituents:
(a) means for providing the carbon-containing input stream in fluid or fluidized form, means for providing an oxidant stream, optionally means for providing a moderator stream comprising steam and/or carbon dioxide,
(b) a partial oxidation reactor comprising a reaction chamber having an inlet and an outlet, a burner arranged at the inlet of the reaction chamber and a cooling chamber arranged downstream of the outlet of the reaction chamber and in fluid connection therewith,
(c) means for providing a cold, water-containing quench medium stream,
(d) means for introducing the carbon-containing input stream, the oxidant stream and the optional moderator stream into the burner,
(e) means for discharging a hot raw synthesis gas stream from the reaction chamber and means for introducing same into the cooling chamber,
(f) means for subjecting the hot raw synthesis gas stream in the cooling chamber to the cold, water-containing quench medium stream,
(g) means for discharging a cold raw synthesis gas stream from the partial oxidation reactor,
(h) means for discharging a hot, liquid quench medium stream laden with solids particles from the partial oxidation reactor, a first heat exchanger, means for introducing at least a portion of the hot quench medium stream into the first heat exchanger, wherein the first heat exchanger is selected from the group of:
(h1) crossflow heat exchangers configured such that the coolant is passed through tubes which have the hot quench medium stream flowing around them,
(h2) shell and tube heat exchangers configured such that the coolant flows through the tube side and the hot quench medium stream flows through the shell side,
(h3) spiral heat exchangers,
means for supplying the carbon-containing input stream or the oxidant stream or the moderator stream or a plurality of these streams to the first heat exchanger as the first coolant,
(j) means for discharging the cold quench medium stream from the first heat exchanger and means for recycling at least a portion of the cold quench medium stream to the cooling chamber.

13. Plant according to Claim 12, **characterized in that** it comprises a second heat exchanger in fluid connection with the quench medium stream.

14. Plant according to Claim 12 or 13, **characterized in that** it comprises an apparatus for solids separation in fluid connection with the quench medium stream.

15. Plant according to Claims 12 to 14, **characterized in that** in the case of the shell and tube heat exchanger or the crossflow heat exchanger the tubes traversed by the coolant are arranged vertically and a storage volume for accommodating solids deposits and a service opening for removing the solids deposits are provided at the bottom of the heat exchanger.

## Revendications

1. Procédé de production d'un gaz de synthèse brut, contenant de l'hydrogène et des oxydes de carbone, par oxydation partielle non catalytique d'un flux d'alimentation carboné solide, liquide ou gazeux avec un agent oxydant oxygéné, ledit procédé comprenant les étapes suivantes :
(a) fournir le flux d'alimentation carboné sous forme fluide ou fluidisée, fournir un flux d'agent oxydant, fournir éventuellement un flux de modérateur comprenant de la vapeur d'eau et/ou du dioxyde de carbone,
(b) fournir un réacteur d'oxydation partielle comprenant une chambre de réaction pourvue d'une entrée et d'une sortie, un brûleur disposé à l'entrée de la chambre de réaction, et une chambre de refroidissement disposée en aval de la sortie de la chambre de réaction et placée en communication fluidique avec celle-ci,
(c) fournir un flux d'agent de refroidissement brusque froid contenant de l'eau,
(d) introduire le flux d'alimentation carboné, le flux d'agent oxydant et le flux de modérateur éventuel dans la chambre de réaction par le biais du brûleur,
(e) faire réagir au moins partiellement le flux d'alimentation carboné avec le flux d'agent oxydant dans des conditions d'oxydation partielle dans la chambre de combustion et/ou dans la chambre de réaction en aval de la chambre de combustion pour former un flux de gaz de synthèse brut chaud.
(f) évacuer le flux de gaz de synthèse brut chaud de la chambre de réaction et l'introduire dans la chambre de refroidissement,
(g) soumettre le flux de gaz de synthèse brut chaud dans la chambre de refroidissement à l'agent de refroidissement brusque froid contenant de l'eau, un flux de gaz de synthèse brut froid et un flux d'agent de refroidissement brusque liquide chaud chargé de particules solides étant ainsi obtenus,
(h) évacuer le flux de gaz de synthèse brut froid du réacteur d'oxydation partielle en vue d'une transformation ultérieure ou d'un traitement ultérieur,
(i) évacuer le flux d'agent de refroidissement brusque liquide chaud, chargé de particules solides, du réacteur d'oxydation partielle et introduire au moins une partie du flux d'agent de refroidissement brusque chaud dans un premier échangeur de chaleur dans le but de refroidir le flux d'agent de refroidissement brusque chaud par échange de chaleur indirect avec un premier agent de refroidissement tout en conservant le flux d'agent de refroidissement brusque à froid, le premier échangeur de chaleur étant choisi dans le groupe suivant :
(i1) échangeur de chaleur à flux croisés, l'agent de refroidissement étant guidé à travers des tubes autour desquels s'écoule le flux d'agent de refroidissement brusque chaud,
(i2) échangeur de chaleur à faisceau de tubes, l'agent de refroidissement s'écoulant à travers le côté tube et le flux d'agent de refroidissement brusque chaud s'écoulant à travers le côté enveloppe,
(i3) échangeur de chaleur en spirale, le flux d'alimentation carboné ou le flux d'agent oxydant ou le flux de modérateur ou plusieurs de ces flux, qui sont préchauffés avant d'être introduits dans le brûleur, servant de premier agent de refroidissement,
(j) évacuer le flux d'agent de refroidissement brusque froid du premier échangeur de chaleur et ramener au moins une partie du flux d'agent de refroidissement brusque froid à la chambre de refroidissement, ce qui forme un cycle de flux d'agent de refroidissement brusque.

2. Procédé selon la revendication 1, **caractérisé en ce qu'**au moins un deuxième échangeur de chaleur est présent pour refroidir le flux d'agent de refroidissement brusque chaud par échange de chaleur indirect, le deuxième échangeur de chaleur fonctionnant avec un deuxième agent de refroidissement qui est choisi dans le groupe suivant : flux d'alimentation carboné, flux d'agent oxydant, flux de modérateur.

3. Procédé selon la revendication 1 ou 2, **caractérisé en ce qu'**une partie du flux d'agent de refroidissement brusque chaud ou refroidi est évacuée en continu ou par intermittence sous forme de flux de rinçage ou de flux de purge du cycle de flux d'agent de refroidissement brusque et est remplacée quantitativement par de l'eau douce ou des flux de condensats exempts de matières solides.

4. Procédé selon la revendication 1 à 3, **caractérisé en ce que** le flux d'agent de refroidissement brusque est amené à un dispositif de séparation de matières solides avant d'être ramené à la chambre de refroidissement.

5. Procédé selon la revendication 4, **caractérisé en ce que** le flux d'agent de refroidissement brusque chaud est amené au dispositif de séparation de matières solides avant d'être introduit dans le premier échangeur de chaleur.

6. Procédé selon la revendication 4, **caractérisé en ce que** le flux d'agent de refroidissement brusque froid est amené au dispositif de séparation de matières solides après avoir été évacué du premier échangeur de chaleur.

7. Procédé selon la revendication 1 à 6, **caractérisé en ce que**, en cas d'utilisation d'un échangeur de chaleur à faisceau de tubes ou d'un échangeur de chaleur à flux croisés, les tubes traversés par l'agent de refroidissement sont disposés verticalement et l'agent de refroidissement brusque chaud est guidé en flux croisé, en flux parallèle ou à flux inversé par rapport au sens d'écoulement de l'agent de refroidissement, le sens d'écoulement de l'agent de refroidissement brusque à travers l'échangeur de chaleur étant dirigé sensiblement verticalement vers le haut ou vers le bas, et un volume de stockage destiné à recevoir les dépôts de matières solides et une ouverture de contrôle destinée à éliminer les dépôts de matières solides étant prévus du côté inférieur de l'échangeur de chaleur.

8. Procédé selon les revendications 1 à 6, **caractérisé en ce qu'**une huile de pyrolyse ou une boue de pyrolyse est utilisée comme flux d'alimentation carboné et un échangeur de chaleur en spirale est utilisé comme premier échangeur de chaleur.

9. Procédé selon l'une des revendications précédentes, **caractérisé en ce que** la pression dans la chambre de réaction et dans la chambre de refroidissement est comprise entre 25 et 80 bar(a) et la température du flux d'agent de refroidissement brusque chaud est comprise entre 150 et 250 °C

10. Procédé selon l'une des revendications précédentes, **caractérisé en ce que** la température de préchauffage du flux d'alimentation carboné avant son introduction dans le brûleur est comprise entre 200 et 400 °C pour les flux d'alimentation gazeux, entre 150 et 300°C pour les flux d'alimentation liquides et entre 20 et 150 °C pour les huiles de pyrolyse ou les boues de pyrolyse comme flux d'alimentation.

11. Procédé selon l'une des revendications précédentes, **caractérisé en ce que** la température de préchauffage de l'agent oxydant oxygéné avant son introduction dans le brûleur est comprise entre 120 et 250 °C.

12. Installation de production d'un gaz brut de synthèse, contenant de l'hydrogène et des oxydes de carbone, par oxydation partielle non catalytique d'un flux d'alimentation carboné solide, liquide ou gazeux avec un agent oxydant oxygéné, ladite installation comprenant les composants suivants :
(a) des moyens destinés à fournir le flux d'alimentation carboné sous forme fluide ou fluidisée, des moyens destinés à fournir un flux d'agent oxydant, éventuellement des moyens destinés à fournir un flux de modérateur comprenant de la vapeur d'eau et/ou du dioxyde de carbone,
(b) un réacteur d'oxydation partielle comprenant une chambre de réaction pourvue d'une entrée et d'une sortie, un brûleur disposé à l'entrée de la chambre de réaction, et une chambre de refroidissement disposée en aval de la sortie de la chambre de réaction et placée en communication fluidique avec celle-ci,
(c) des moyens destinés à fournir un flux d'agent de refroidissement brusque froid contenant de l'eau,
(d) des moyens destinés à introduire le flux d'alimentation carboné, le flux d'agent oxydant et le flux de modérateur éventuel dans le brûleur,
(e) des moyens destinés à évacuer le flux de gaz de synthèse brut chaud de la chambre de réaction et des moyens destinés à introduire celui-ci dans la chambre de refroidissement,
(f) des moyens destinés à soumettre le flux de gaz de synthèse brut chaud dans la chambre de refroidissement au flux d'agent de refroidissement brusque froid contenant de l'eau,
(g) des moyens destinés à évacuer un flux de gaz de synthèse brut froid du réacteur d'oxydation partielle,
(h) des moyens destinés à évacuer un flux d'agent de refroidissement brusque liquide chaud, chargé de particules solides, du réacteur d'oxydation partielle, un premier échangeur de chaleur, des moyens destinés à introduire au moins une partie du flux d'agent de refroidissement brusque chaud dans le premier échangeur de chaleur, le premier échangeur de chaleur étant choisi dans le groupe suivant :
(h1) échangeur de chaleur à flux croisés conçu de façon à guider l'agent de refroidissement à travers des tubes autour desquels s'écoule le flux d'agent de refroidissement brusque chaud,
(h2) échangeur de chaleur à faisceau de tubes conçu de façon à ce que l'agent de refroidissement s'écoule à travers le côté tube et à ce que le flux d'agent de refroidissement brusque chaud s'écoule à travers le côté enveloppe,
(h3) échangeur de chaleur en spirale,
des moyens destinés à amener le flux d'alimentation carboné ou le flux d'agent oxydant ou le flux de modérateur ou plusieurs de ces flux comme premier agent de refroidissement au premier échangeur de chaleur,
(j) des moyens destinés à évacuer le flux d'agent de refroidissement brusque froid du premier échangeur de chaleur et des moyens destinés à ramener au moins une partie du flux d'agent de refroidissement brusque froid à la chambre de refroidissement.

13. Installation selon la revendication 12, **caractérisée en ce qu'**elle comprend un deuxième échangeur de chaleur en communication fluidique avec le flux de refroidissement brusque.

14. Installation selon la revendication 12 ou 13, **caractérisée en ce qu'**elle comprend un dispositif de séparation de matières solides qui est en communication fluidique avec le flux d'agent de refroidissement brusque.

15. Installation selon les revendications 12 à 14, **caractérisée en ce que**, dans le cas de l'échangeur à faisceau de tubes ou de l'échangeur à flux croisés, les tubes traversés par l'agent de refroidissement sont disposés verticalement et un volume de stockage est prévu pour recevoir les dépôts de matières solides et une ouverture de contrôle est prévue du côté inférieure de l'échangeur de chaleur pour éliminer les dépôts de matières solides.
